# EUROPEAN PATENT SPECIFICATION

(11) **EP 2 281 460 B1**
(45) Date of publication and mention of the grant of the patent: **29.08.2018**
(21) Application number: 10007738.7
(22) Date of filing: 26.07.2010
(51) Int. Cl.: A21D 2/36

(54) **Plant extracts as additives for yeast raised baked goods**
Pflanzenextrakte als Additive für mit Hefe aufgegangene Backwaren
Extraits de plante en tant qu'additifs pour les produits cuisinés levés à base de levure

(30) Priority: 04.08.2009 EP 09010035
(43) Date of publication of application: 09.02.2011
(73) Proprietor: Cognis IP Management GmbH, 40589 Dusseldorf (DE)
(72) Inventor: Funke, Andreas, 89165 Dietenheim (DE); Pascual, Ceferino, 08231 Barcelona (ES); Villar Gonzalez, Agustin, 08291 Ripollet/ Barcelona (ES); Seitter, Michael, 89269 Vöhringen (DE)
(74) Representative: BASF IP Association

(56) References cited:
- EP-A1- 0 914 777
- WO-A1-2007/053846
- WO-A1-2008/130113
- "Hot cross buns", , 2005, XP2560434, Retrieved from the Internet: URL:http://www.marmiton.org/Recettes/Recet te_hot-cross-buns-petits-pains-anglais-de- paques_36884.asp [retrieved on 2009-12-14]
- "Langhopf (Alsace)", , 2003, XP002560435, Retrieved from the Internet: URL:http://www.marmiton.org/Recettes/Recet te-Impression_langhopf-alsace_15679.aspx [retrieved on 2009-12-14]
- "Cougnons, cougnoles et cramique", , 2008, XP002560436, Retrieved from the Internet: URL:http://www.marmiton.org/Recettes/Recet te_cougnons-cougnoles-et-cramique_69416.as px [retrieved on 2009-12-14]
- DATABASE WPI Section Ch, Week 200339 Thomson Scientific, London, GB; Class D11, AN 2003-407650 XP002560437, "Preparation of bread", & JP 2003 023954 A (SUN RICH KK) 28 January 2003 (2003-01-28)
- DATABASE WPI Section Ch, Week 200747 Thomson Scientific, London, GB; Class D11, AN 2007-477826 XP002560438, "Kidney tonifying bread", & CN 1 919 011 A (ZHANG H.) 28 February 2007 (2007-02-28)
- DATABASE WPI Section Ch, Week 200566 Thomson Scientific, London, GB; Class D11, AN 2005-645797 XP002560440, "Production of pizza dough using ginseng vegetable oil", & KR 2005 030 978 A (KOO S H) 1 April 2005 (2005-04-01)
- DATABASE WPI Section Ch, Week 200062 Thomson Scientific, London, GB; Class D11, AN 2000-642022 XP002560439, "Wheat flour processed food manufacturing method for use as bread and noddles", & JP 2000 245415 A (MARUZEN SEIYAKU KK) 12 September 2000 (2000-09-12)

## Description

The present invention relates to the use of an active component for improving dough stability of yeast dough for making baked goods and/or for improving (i. e. enhancing) the volume of yeast raised baked goods, wherein the active component .is selected from the group consisting of an extract of any part of a plant of the species ginseng (Panax ginseng C. A. Meyer), an extract of any part of a plant of the species notoginseng (Panax pseudoginseng), an extract of any part of a plant of the species washnut (Sapindus mucorossi), an extract of any part of a plant of the species butcher's broom (Ruscus aculeatus), an extract of any part of a plant of the species Hoodia gordonii, a glycoside of a chemical compound comprising a gonane structure and a mixture of two or more of these extracts and/or substances.
In order to improve the stability of yeast dough and/or in order to improve (i. e. to increase) the volume of baked goods, such as bread or rolls, obtained from yeast dough emulsifiers and/or enzymes are added to yeast dough before baking.
Improvement of the stability of yeast dough means increasing the tolerance of the dough against a kneading time that is longer than optimal, i. e. even if the dough is kneaded longer than necessary the properties of the dough and of the resulting baked goods do not deteriorate. Furthermore, improvement of the stability of yeast dough means increasing the tolerance of the dough against a fermentation time that is longer than optimal. Furthermore, improvement of the stability of yeast dough means increasing the shock resistance of the dough.
The following emulsifiers and enzymes are known and are used for manufacturing yeast raised baked goods. DATEMs (diacetyltartaric acid esters of monoglycerides and diglycerides; E-number according to EU legislation: E 472e / E 472f; FDA-CFR-no: 184.1101) improve dough stability and volume of baked goods. SSL (sodium stearoyl-2-lactylate; E-number according to EU legislation: E 481) improves dough stability and volume and has an antistaling effect. Lipases, especially phospholipases improve dough stability and volume.
The mode of action of these emulsifiers is based on interactions with the wheat gluten, which is strengthened in such a way that the gas formed by the yeast can be better hold back in the dough. The result is better dough stability (higher mixing tolerance, higher fermentation tolerance and higher shock tolerance) and a higher volume of the baked goods obtained after baking. Lipases and phospholipases create active emulsifiers from precursors present in wheat flour which then have a similar effect.

The effects of a DATEM during bread making begin immediately with the mixing process and continue until baking is completed. Greater dough mixing tolerance is achieved, i.e. also at too long mixing time baked goods of good shape and good volume are obtained. Increased gas-retaining capacity and improved fermentation tolerance is achieved, i.e. also at too long fermentation times baked goods of good shape and good volume are obtained. Greater dough stability and shock tolerance is achieved, especially under the stressed conditions of larger commercial or plant bakeries. Increased bread volume and enhanced over-all appearance is achieved. Finer or more controlled crumb structure according to the style of the product is achieved.

Typical dosage level of DATEMs used are 0.2 - 0.5 % on flour.

These important improvements of both dough handling and final baked goods quality are not only due to the fundamental surface active effects of DATEMs, but also to specific molecular interactions which occur between DATEMs and lipids, proteins and carbohydrates of the flour. The interaction between DATEMs and gluten is of the utmost importance. Hydrogen bondings between the DATEM molecule and amino acid residues of gluten are formed, leading to a stronger and more developed gluten network. The dough becomes more stable and shows an improved gas-retaining capacity which leads to the above advantages.

SSL in principle has the same effect, but not quite as strong as DATEM.

EP 914 777 A describes the preparation of white bread by baking a dough comprising flour, yeast, yeast food, sugar, salt, skim milk powder, shortening ,water and a complex of gliadin with yucca saponin. The white bread prepared has more excellent specific volume than a bread prepared using a dough comprising only gluten, gliadin or glutenin. The use of an extract of a yucca plant is not disclosed. An improvement of dough stability is not disclosed.

The use of ginseng as a spice in several baked goods, e. g. buns, is known. Recipes can be found on the internet. It in not known, however, to use ginseng extract instead of powdered parts of ginseng. Obviously powdered ginseng parts are different from ginseng extract and different effects are to be expected because, amongst other reasons, powdered ginseng comprises intact cells of the ginseng plant and does not release the same active components to the same extent than an extract of a ginseng plant.
JP 2003-023954 A describes the preparation of bread by baking dough comprising wheat flour, water, salt, sugar, boiled rice, yeast, potato, apple and ginseng. The Ginseng extract is not disclosed. XP002560434 (retrieved from the Internet: URL:http://www.marmiton.org/Recettes/ Recette_hot-cross-buns-petits-pains-anglais-de-paques_36884.asp) describes the preparation of buns by baking a dough comprising flour, yeast and ginseng. The Ginseng extract is not disclosed.

XP002560435 (retrieved from the Internet: URL:http://www.marmiton.org/Recettes/Recette-Impression_langhopf-alsace_15679.aspx) discloses the preparation of Langhopf (bakery product from Alsace - France) by baking a dough comprising flour, yeast, ginseng. The Ginseng extract is not disclosed.

XP002560436 (retrieved from the Internet: URL:http://www.marmiton.org/Recettes/ Recette_cougnons-cougnoles-et-cramique_69416.aspx) describes bakery products prepared by baking a dough comprising flour, yeast and ginseng. The Ginseng extract is not disclosed. WO 2007/053846 describes a composition comprising an extract of a plant of the genus Pinus and an extract of a plant of the genus Hoodia or Trichocaulon. This composition is incorporated into various foods, drinks, snacks, non-diet products such as candy, snack products such as chips, prepared meat products, milk, cheese, yogurt, sport bars, sport drinks, mayonnaise, salad dressing, bread or drinks. This is done to treat weight loss.
WO 2008/130113 describes a health food composition for prevention and treatment of a periodontal disease, comprising one of respective extracts from Rehmanniae Radix Preparata and Panax notoginseng or a mixture of the respective extracts. A flour mixture comprising 0.5-5.0 wt% of the extract was used to make breads, cakes, cookies and noodles. An extract of Panax pseudoginseng is not disclosed.
CN 1 919 011 A describes the preparation of bread from a dough comprising broomrape. The use of an extract of broomrape is not disclosed.
JP 2000-245415 A describes the preparation of bread by baking a dough comprising wheat flour, yeast, water and yucca extract.
KR 2005-0030978 A describes the production of pizza dough by mixing yeast, salt, sugar, water wheat flour and ginseng in vegetable oil. The use of a ginseng extract is not disclosed.
The problem underlying the present invention is to provide further additives for the dough of yeast raised baked goods that provide for at least some of the advantageous effects that DATEMs provide for.
This problem is solved by using an active component according to the present invention for improving dough stability of yeast dough for making baked goods and/or for improving (i. e. enhancing) the volume of yeast raised baked goods.
The active component according to the present invention is selected from the group consisting of:
- an extract of any part of a plant of the species ginseng (Panax ginseng C. A. Meyer),
- an extract of any part of a plant of the species notoginseng (Panax pseudoginseng),
- an extract of any part of a plant of the species washnut (Sapindus mucorossi),
- an extract of any part of a plant of the species butcher's broom (Ruscus aculeatus),
- an extract of any part of a plant of the species Hoodia gordonii,
- a glycoside of a chemical compound comprising a gonane structure,
- and a mixture of two or more of these extracts and/or substances.
In one embodiment of the present invention the extract of any part of a plant of the species ginseng (Panax ginseng C. A. Meyer) is an extract of ginseng roots which is preferably obtainable by extracting the roots with 70 % by weight methanol in water at a temperature of preferably 25 to 35°C.
In one embodiment of the present invention the extract of any part of a plant of the species notoginseng (Panax pseudoginseng) is an extract of notoginseng roots which is preferably obtainable by extracting the roots with 70 % by weight methanol in water at a temperature of preferably 25 to 35 °C.

In one embodiment of the present invention the extract of any part of a plant of the species butcher's broom (Ruscus aculeatus) is an extract of roots of butcher's broom which is preferably obtainable by extracting the roots with 60 % by weight ethanol in water, preferably at reflux temperature.

In one embodiment of the present invention the extract of any part of a plant of the species butcher's broom (Ruscus aculeatus) is an extract of rhizemos of butcher's broom which is preferably obtainable by extracting the rhizomes with 60 % by weight ethanol in water, preferably at reflux temperture.

In one embodiment of the present invention the extract of any part of a plant of the species washnut (Sapindus mucorossi) is an extract of ground Indian washnut in powderform which is preferably obtainable by extracting the ground Indian washnut in powderform with water, preferably at a temperature of 65 °C.

In one embodiment of the present invention the extract of any part of a plant of the species washnut (Sapindus mucorossi) is an extract of ground Indonesian washnut hulls which is preferably obtainable by extracting the ground Indonesian washnut hulls with water, preferably at a temperature of 65 °C.

In one embodiment of the present invention the glycoside of a chemical compound comprising a gonane structure is a ginsenoside.

In one embodiment of the present invention the glycoside of a chemical compound comprising a gonane structure is a glycoside of a sterol.

Accordingly the use of the active component according to the present invention for improving dough stability of yeast dough for making baked goods and/or for improving (i. e. enhancing) the volume of yeast raised baked goods is a subject of the present invention.

Further subjects of the present invention are the process for making yeast dough, the process for making yeast raised baked goods, the yeast dough and the yeast raised baked goods as defined in the claims of the present document.

In one embodiment of the present invention the active component according to the present invention is used in an amount of 0.3 to 5.0 % by weight, preferably 0.5 to 3 % by weight, preferably 1 to 2 % by weight, of the amount of flour in the dough.

The use, the processes, the dough and the baked goods according to the present invention have many advantages. Dough stability is improved. Volume of the baked goods is improved. Natural ingredients replace processed oleochemical additives which meets modern consumer demand.

It is believed that the active substances of the extracts according to the present invention, bringing about the advantageous effects according to the present invention, are special saponins or ginsenosides or derivatives thereof. However not all saponins from any source have shown the advantageous effects according to the present invention. E. g. extracts from saponin-rich plants like Siberian ginseng (Eleutherococcus senticosus) or ivy (Hedera helix) did not show good results.
Good results were obtained with extracts from ginseng (Panax ginseng C. A. Meyer) at concentrations of 0.3 to 5.0 % by weight, preferably 0.5 to 3 % by weight, preferably 1 to 2 % by weight, based on the amount of flour in the dough.

### Examples

The following baking test show some of the advantageous effects brought about by the subjects of the present invention. % is % by weight, unless defined differently.

Crispy rolls ("pistolets") were baked according to the standard baking test BR 31. The following defines the standard baking test BR 31.

### Standard Baking Test - Pistolets, BR 31: dough composition:

| | **g** | **%** |
|---|---|---|
| wheat flour (0.5 % ash), untreated | 2000.00 | 100.00 |
| yeast | 120.00 | 6.00 |
| improver 70/30 having the following composition: | 52.00 | 2.60 |
| ascorbic acid | | 0.31 |
| Nutrilife® AM 17 (alpha-amylase, 50000 SKB/g | | 0.06 |
| dextrose | | 50.00 |
| wheat starch | | ad 100.00 |
| salt | 40.00 | 2.00 |
| Nutrilife® CS 30 (amylase/pentosanase) | 0.3 | 0.015 |
| Lametop® 300 (80 % diacetyl tartaric acid esters of mono- and diglycerides and 20 % calciumcarbonate as anticaking agent) | 0.80 or 0.00 | 0.25 or 0.00 |
| water | 1180 | 59.00 |

### Standard Baking Test - Pistolets, BR 31: manufacture of dough:

All ingredients as mentioned above were added into a Kemper spiral mixer SP 15. The reference contained 0.4 % Lametop® 300 (80 % DATEM and 20 % calciumcarbonate as anticaking agent). In the test trials done parallelly no Lametop® 300 was used, but Ginseng Dry Extract at 0.5, 1.0, 1.5 and 2.0 % was used. The ingredients were mixed for 5.5 min at low speed and for 0.5 min at high speed. After this the doughs had a floor rest of 12 min at room temperature. 1500 g of dough were scaled and after an intermediate proof of 12 min divided into 30 pieces and shaped round by a Fortuna Automat. Then the dough pieces were put into the proofing (fermentation) chamber (35 °C, 85 % relative humidity). Normal fermentation time was 35 min, extended fermentation time was 45 min. Baking was done in a deck oven at approx 240 °C for approx 12 min. After cooling weight and volume was measured and specific volume was calculated.
Mixing: approximately 5 minutes slow, 1 minute fast (using a Kemper Spiral mixer SP 15)
Dough temperature: 27 - 29° C
Floor rest: approx. 12 min.
Weigh-in: 1500 g (for 30 pieces)
Intermediate proof: 12 minutes
Dividing and shape round (weight of dough piece: 50 g)
Final proof: 35° C, 85 % relative humidity

Additionally 150 ppm Nutrilife® CS 30 (amylase / pentosanase) was added in all trials. The formulation with DATEM (0,4 % Lametop® 300 (Cognis GmbH, Monheim, Germany) based on the amount of flour) served as reference. Tests were baked without DATEM using instead Ginseng Dry Extract (Cognis GmbH, Monheim, Germany) at concentrations of 0.5 %, 1.0 %, 1.5 % and 2.0 % based on the amount of flour. The Ginseng Dry Extract was obtained by extracting roots of Panax ginseng C.A. Meyer with 70 % by weight methanol in water at a temperature of 30 +/- 5 °C.

### Results:

dough properties: comparable to reference at all dosages
dough stability (evaluated by comparing relative volumes at normal and extended proof times): comparable for ginseng extract concentration of 1.0 %, 1.5 % and 2.0 %
volume (in % against reference):
   at 0.5 % ginseng: normal proof: 93 %, extended proof 92 %
   at 1.0 % ginseng: normal proof: 101 %, extended proof 101 %
   at 1.5 % ginseng: normal proof: 98 %, extended proof 101 %
   at 2.0 % ginseng: normal proof: 100 %, extended proof 103 %

Meaning of terms used in "Results":
- specific volume = volume per kg dough
- relative volume = specific volume of the test trial compared to specific volume of the reference trial, expressed in %
- normal proof: normal fermentation time
- extended proof: extended fermentation time, in order to test dough stability/fermentation tolerance

## Claims

1. Use of an active component for improving dough stability of yeast dough for making baked goods and/or for improving (i. e. enhancing) the volume of yeast raised baked goods, wherein the active component .is selected from the group consisting of:
an extract of any part of a plant of the species ginseng (Panax ginseng C. A. Meyer),
an extract of any part of a plant of the species notoginseng (Panax pseudoginseng),
an extract of any part of a plant of the species washnut (Sapindus mucorossi),
an extract of any part of a plant of the species butcher's broom (Ruscus aculeatus),
an extract of any part of a plant of the species Hoodia gordonii,
a glycoside of a chemical compound comprising a gonane structure,
and a mixture of two or more of these extracts and/or substances.

2. A process for making yeast dough comprising mixing flour, water, yeast and an active component as defined in claim 1 with the proviso that the active component is not an extract of any part of a plant of the species Hoodia gordonii and that it is not an extract of any part of a plant of the species notoginseng.

3. The process of claim 2 comprising mixing
100 parts by weight flour,
40 to 70, preferably 50 to 60, parts by weight water,
1 to 7, preferably 3 to 5, parts by weight compressed fresh yeast or an equivalent amount of dry yeast and
0.3 to 5 parts by weight active component.

4. A yeast dough comprising flour, water, yeast and an active component as defined in claim 1 with the proviso that the active component is not an extract of any part of a plant of the species Hoodia gordonii and that it is not an extract of any part of a plant of the species notoginseng.

5. The yeast dough of claim 4 comprising
100 parts by weight flour,
40 to 70, preferably 50 to 60, parts by weight water,
1 to 7, preferably 3 to 5, parts by weight compressed fresh yeast or an equivalent amount of dry yeast and
0.3 to 5 parts by weight active component.

6. The yeast dough according to any of claims 4 to 5 wherein the flour comprises (preferably consists of) wheat flour or rye flower.

7. A process for making yeast raised baked goods comprising providing the yeast dough according to any of claims 4 to 6 and baking said yeast dough.

8. Yeast raised baked goods obtainable by the process according to claim7.

9. The yeast raised baked goods according to claim 8 wherein these goods are bread, rolls, baguettes, soft buns, sandwich bread, ciabatta, yeast donuts, croissants, Danish pastries, steamed buns or pizzas.

## Patentansprüche

1. Verwendung einer aktiven Komponente zum Verbessern der Teigstabilität von Hefeteig zur Herstellung von Backwaren und/oder zum Verbessern (d. h. Erhöhen) des Volumens von mit Hefe getriebenen Backwaren, wobei die aktive Komponente ausgewählt ist aus der Gruppe bestehend aus:
einem Extrakt eines beliebigen Teils einer Pflanze der Spezies Ginseng (Panax ginseng C. A. Meyer),
einem Extrakt eines beliebigen Teils einer Pflanze der Spezies Notoginseng (Panax pseudoginseng),
einem Extrakt eines beliebigen Teils einer Pflanze der Spezies Seifennuss (Sapindus mucorossi),
einem Extrakt eines beliebigen Teils einer Pflanze der Spezies Mäusedorn (Ruscus aculeatus),
einem Extrakt eines beliebigen Teils einer Pflanze der Spezies Hoodia gordonii,
einem Glycosid einer chemischen Verbindung, die eine Gonanstruktur umfasst,
und einem Gemisch von zwei oder mehr dieser Extrakte und/oder Stoffe.

2. Verfahren zur Herstellung von Hefeteig, umfassend Mischen von Mehl, Wasser, Hefe und einer aktiven Komponente gemäß Anspruch 1, mit der Maßgabe, dass die aktive Komponente kein Extrakt eines beliebigen Teils einer Pflanze der Spezies Hoodia gordonii ist und dass er kein Extrakt eines beliebigen Teils einer Pflanze der Spezies Notoginseng ist.

3. Verfahren gemäß Anspruch 2, umfassend Mischen von
100 Gewichtsteile Mehl,
40 bis 70, vorzugsweise 50 bis 60, Gewichtsteile Wasser,
1 bis 7, vorzugsweise 3 bis 5, Gewichtsteile gepresste frische Hefe oder eine äquivalente Menge Trockenhefe und
0,3 bis 5 Gewichtsteile aktive Komponente.

4. Hefeteig, umfassend Mehl, Wasser, Hefe und eine aktive Komponente gemäß Anspruch 1, mit der Maßgabe, dass die aktive Komponente kein Extrakt eines beliebigen Teils einer Pflanze der Spezies Hoodia gordonii ist und dass er kein Extrakt eines beliebigen Teils einer Pflanze der Spezies Notoginseng ist.

5. Hefeteig gemäß Anspruch 4, umfassend
100 Gewichtsteile Weizenmehl,
40 bis 70, vorzugsweise 50 bis 60, Gewichtsteile Wasser,
1 bis 7, vorzugsweise 3 bis 5, Gewichtsteile gepresste frische Hefe oder eine äquivalente Menge Trockenhefe und
0,3 bis 5 Gewichtsteile aktive Komponente.

6. Hefeteig gemäß einem der Ansprüche 4 bis 5, wobei das Mehl Weizenmehl oder Roggenmehl umfasst (vorzugsweise daraus besteht).

7. Verfahren zur Herstellung von mit Hefe getriebenen Backwaren, umfassend Bereitstellen des Hefeteigs gemäß einem der Ansprüche 4 bis 6 und Backen des Hefeteigs.

8. Mit Hefe getriebene Backwaren, erhältlich durch das Verfahren gemäß Anspruch 7.

9. Mit Hefe getriebene Backwaren gemäß Anspruch 8, wobei die Waren Brot, Brötchen, Baguettes, weiche Brötchen, Sandwichbrot, Ciabatta, Hefedonuts, Croissants, Plundergebäck, gedämpfte Brötchen oder Pizzas sind.

## Revendications

1. Utilisation d'un composant actif destiné à améliorer la stabilité de pâte d'une pâte levurée afin de fabriquer des produits de boulangerie et/ou afin d'améliorer (c'est-à-dire augmenter) le volume de produits de boulangerie levés à la levure, dans laquelle le composant actif est choisi dans le groupe constitué par :
un extrait d'une partie quelconque d'une plante de l'espèce ginseng (*Panax ginseng* C. A. Meyer),
un extrait d'une partie quelconque d'une plante de l'espèce notoginseng (*Panax pseudoginseng*)*,*
un extrait d'une partie quelconque d'une plante de l'espèce arbre à savon d'Inde (*Sapindus mucorossi*)*,*
un extrait d'une partie quelconque d'une plante de l'espèce fragon faux houx (*Ruscus aculeatus*)*,*
un extrait d'une partie quelconque d'une plante de l'espèce *Hoodia gordonii,*
un glycoside d'un composé chimique comprenant une structure de gonane,
et un mélange de deux, ou plus, de ces extraits et/ou substances.

2. Procédé de préparation de pâte levurée, comprenant le pétrissage de farine, d'eau, de levure et d'un composant actif tel que défini selon la revendication 1, à condition que le composant actif ne soit pas un extrait d'une partie quelconque d'une plante de l'espèce *Hoodia gordonii* et qu'il ne soit pas un extrait d'une partie quelconque d'une plante de l'espèce notoginseng.

3. Procédé selon la revendication 2, comprenant le pétrissage de
100 parties en poids de farine,
40 à 70, préférablement 50 à 60, parties en poids d'eau, 1 à 7, préférablement 3 à 5, paries en poids de levure fraîche compressée ou d'une quantité équivalente de levure sèche, et
0,3 à 5 parties en poids de composant actif.

4. Pâte levurée, comprenant de la farine, de l'eau, de la levure et un composant actif tel que défini selon la revendication 1, à condition que le composant actif ne soit pas un extrait d'une partie quelconque d'une plante de l'espèce *Hoodia gordonii* et qu'il ne soit pas un extrait d'une partie quelconque d'une plante de l'espèce notoginseng.

5. Pâte levurée selon la revendication 4, comprenant
100 parties en poids de farine,
de 40 à 70, préférablement de 50 à 60, parties en poids d'eau,
de 1 à 7, préférablement de 3 à 5, parties en poids de levure fraîche compressée ou d'une quantité équivalente de levure sèche, et
de 0,3 à 5 parties en poids de composant actif.

6. Pâte levurée selon l'une quelconque des revendications 4 à 5, dans laquelle la farine comprend (préférablement est constituée de) de la farine de blé ou de la farine de seigle.

7. Procédé de fabrication de produits de boulangerie levés à la levure, comprenant la fourniture de la pâte levurée selon l'une quelconque des revendications 4 à 6 et la cuisson de ladite pâte levurée.

8. Produits de boulangerie levés à la levure pouvant être obtenus par le procédé selon la revendication 7.

9. Produits de boulangerie levés à la levure selon la revendication 8, où ces produits sont du pain, des petits pains, des baguettes, des pains briochés, du pain à sandwichs, de la ciabatta, des beignets à la levure, des croissants, des feuilletés danois, des pains à la vapeur ou des pizzas.
